# FASCICULE DE BREVET EUROPEEN

(11) **EP 2 076 934 B1**
(45) Date de publication et mention de la délivrance du brevet: **09.09.2015**
(21) Numéro de dépôt: 07858516.3
(22) Date de dépôt: 05.10.2007
(51) Int. Cl.: H01M 8/12, B01D 71/06

(54) **L'UTILISATION D'UN ELECTROLYTE CERAMIQUE CONDUCTEUR DE PROTONS**
VERWENDUNG EINES PROTONENLEITENDEN KERAMISCHE ELEKTROLYTS
USE OF A PROTON-CONDUCTING CERAMIC ELECTROLYTE

(30) Priorité: 11.10.2006 FR 0608914
(43) Date de publication de la demande: 08.07.2009
(73) Titulaire: Electricité de France, 75008 Paris (FR); Centre National de la Recherche Scientifique (CNRS), 75794 Paris Cedex 16 (FR)
(72) Inventeur: STEVENS, Philippe, 77940 Noissy-Rudignon (FR); JOUBERT, Olivier, F-44830 Brains (FR); PIFFARD, Yves, F-44240 La Chapelle Sur Erdre (FR); CALDES-ROUILLON, Maria Teresa, F-44300 Nantes (FR); DELAHAYE, Thibaud, F-33290 Blanquefort (FR)
(74) Mandataire: Cabinet Plasseraud
(86) Numéro de dépôt international: PCT/FR2007/052085
(87) Numéro de publication internationale: WO 2008/043943

(56) Documents cités:
- EP-A- 1 369 949
- JAYARAMAN V ET AL: "Characterization of perovskite systems derived from Ba2In2O5@? - Part II: The proton compounds Ba2In2(1-x)Ti2xO4+2x(OH)y [0=<x=<1" SOLID STATE IONICS, NORTH HOLLAND PUB. COMPANY. AMSTERDAM, NL, vol. 170, no. 1-2, 14 mai 2004 (2004-05-14), pages 25-32, XP004515894 ISSN: 0167-2738
- JAYARAMAN V ET AL: "Characterization of perovskite systems derived from Ba2In2O5@? - Part I: the oxygen-deficient Ba2In2(1-x)Ti2xO5+x@?1-x (0=<x=<1) compounds" SOLID STATE IONICS, NORTH HOLLAND PUB. COMPANY. AMSTERDAM, NL, vol. 170, no. 1-2, 14 mai 2004 (2004-05-14), pages 17-24, XP004515893 ISSN: 0167-2738
- A. MANTHIRAM ET AL.: "Characterization of oxygen-deficient perovskites as oxide-ion electrolytes" SOLID STATE IONICS, vol. 62, 1993, pages 225-234, XP002430208
- TAKAHISA OMATA ET AL.: "Formation and Thermal Stability of Hydrate-Like Compounds of Ba2(In1-xMIIIx)2O5.nH2O (MIII = Ga, Sc, Lu and Y)" J. OF THE ELECTROCHEMICAL SOCIETY, vol. 152, no. 6, 2005, pages A1068-A1072, XP002430209

## Description

La présente invention concerne un dispositif électrochimique, tel qu'une pile à combustible ou une cellule d'électrolyse, contenant, en tant qu'électrolyte, une céramique conductrice de protons à base de baryum et d'indium ainsi que l'utilisation d'une telle céramique en tant que conducteur de protons dans un dispositif électrochimique à une température comprise entre 200 °C et 600 °C.

Les piles à combustible sont des générateurs électrochimiques qui convertissent de façon continue, sans combustion directe, des gaz tels que H₂ et O₂ en électricité et chaleur grâce aux réactions électrochimiques intervenant au niveau des électrodes séparées par un électrolyte. Pour des raisons essentiellement liées à la fiabilité de fonctionnement et aux contraintes d'industrialisation en grande série, le choix de piles à combustible comportant un électrolyte solide est particulièrement intéressant.

Les deux principaux types de piles à combustible à électrolyte solide sont actuellement les piles à membrane échangeuse de protons (PEMFC, *Proton Exchange Membrane Fuel Cell)* et les piles à oxydes solides (SOFC, *Solid Oxide Fuel Cell).*

Le principal inconvénient des PEMFC réside dans la nécessité d'hydratation de la membrane conductrice de protons et dans la mauvaise stabilité thermique des matériaux polymères, ce qui limite l'utilisation de telles piles à un domaine de température inférieur à 120 °C et implique de ce fait l'utilisation, dans les électrodes, de catalyseurs à base de platine coûteux et sensibles à l'empoisonnement par le monoxyde de carbone.

La technologie SOFC qui implique un fonctionnement à des températures généralement supérieures à 700 °C, présente de nombreux avantages par rapport aux PEMFC, tels qu'un rendement électrique élevé, souvent supérieur à 45 %, la possibilité d'utiliser le monoxyde de carbone en tant que combustible, de faire du reformage direct et l'absence de catalyseurs coûteux. La température de fonctionnement élevée de ces piles induit toutefois une perte de stabilité à long terme, un temps de démarrage long et une faible capacité à supporter des cycles thermiques. L'enjeu pour les SOFC est la diminution de la température de fonctionnement dans le but de limiter les réactions de dégradation aux interfaces, d'améliorer la résistance au cyclage thermique et d'augmenter ainsi la durée de vie des piles.

Il existe donc un besoin de piles à combustible permettant de surmonter les inconvénients des systèmes décrits ci-dessus, c'est-à-dire de piles à combustible à électrolyte solide capables de fonctionner à des températures moins élevées que les SOFC et présentant une moindre sensibilité à la déshydratation et à l'empoisonnement par le monoxyde de carbone que les PEMFC.

Dans le cadre de ses recherches visant à mettre au point des piles à combustible toujours plus performants, la Demanderesse a découvert qu'une famille particulière de matériaux céramiques, décrits plus en détail ci-après, présentaient d'excellentes propriétés de conduction protonique lorsqu'ils étaient utilisés dans un domaine de température allant d'environ 200 °C à 600 °C, autrement dit dans un domaine de température intermédiaire entre les températures de fonctionnement des SOFC et des PMEFC.

Les céramiques conductrices de protons en question sont connues en tant que telles et ont été décrites notamment dans l'article de V. Jayaraman et al., publié dans Solid State Ionics, 170, (2004), pages 25 - 32. Il s'agit de matériaux à base d'oxyde de baryum et d'indium, lacunaires en oxygène, dont les lacunes sont au moins partiellement comblées par des groupes hydroxyle fixés réversiblement par hydratation des matériaux. Jayaraman et al., dans l'article cité, ont évalué la conductivité protonique des matériaux céramiques à des températures allant de la température ambiante à environ 180 °C et ont obtenu des résultats peu satisfaisants, la conductivité protonique maximale à 180 °C ne dépassant pas 10⁻⁶ S.cm⁻¹. Ces auteurs n'ont pas fait de mesures de conductivité au-delà 180 °C car ils avaient observé un début de déshydratation du matériau céramique à partir d'environ 200 °C, déshydratation qui devrait en principe se traduire par une diminution de la conductivité protonique suite à la disparition des groupes hydroxyle.

La présente invention est basée sur la découverte que, malgré le phénomène de déshydratation du matériau céramique, observé au-delà de 200 °C, les matériaux décrits dans cet article présentent une conductivité protonique élevée à des températures comprises entre 200 °C et 600 °C, et peuvent de ce fait être utilisés en tant qu'électrolyte solide dans des piles à combustible, mais également dans d'autres dispositifs électrochimiques utilisant des conducteurs protoniques, tels que des cellules d'électrolyse, des membranes de séparation d'hydrogène ou des détecteurs d'hydrogène.

La présente invention a par conséquent pour objet l'utilisation d'une céramique de formule (I)

Ba₂In_{2(1-y)}Ti_{2y}O_{4+δ}(OH)_{δ},

où
0 ≤ y ≤ 0,3, δ ≤ 2 et 0 < δ' ≤ 2, en tant qu'électrolyte solide conducteur de protons dans un dispositif électrochimique choisi parmi une pile à combustible, une cellule d'électrolyse, une membrane de séparation d'hydrogène à partir d'un mélange gazeux, ou encore un détecteur d'hydrogène.

Le matériau céramique est utilisé dans la plage de température où sa conductivité protonique est maximale, c'est-à-dire à une température comprise entre 200 °C et 600 °C, en particulier entre 300 °C et 500 °C.

La présente invention divulgue en outre un tel dispositif électrochimique contenant un électrolyte solide conducteur de protons fait en une céramique de formule (I)

(I) Ba₂In_{2(1-y)}Ti₂yO₄,_{δ}(OH)_{δ'}

où
0 ≤ y ≤ 0, 3, δ ≤ 2 et 0 < δ' ≤ 2.

Dans un mode de réalisation particulier le dispositif électrochimique est une pile à combustible comportant un compartiment d'anode, avec une anode, alimenté en continu par de l'hydrogène ou par un mélange de gaz contenant de l'hydrogène et un compartiment de cathode, avec une cathode, alimenté par de l'oxygène ou de l'air, les deux compartiments étant séparés par l'électrolyte conducteur de protons de formule (I) ci-dessus.

Dans un autre mode de réalisation, le dispositif électrochimique est une cellule d'électrolyse, comportant une électrode négative, ou cathode, et une électrode positive, ou anode, séparées l'une de l'autre par un électrolyte conducteur de protons de formule (I) ci-dessus.

Dans un troisième mode de réalisation, le dispositif est une membrane de purification d'hydrogène comportant une électrode positive et une électrode négative séparées par une céramique conductrice de protons de formule (I) ci-dessus.

Dans un quatrième mode de réalisation, le dispositif est une membrane de purification d'hydrogène formée par un solide fritté contenant un mélange percolant (i) de particules d'au moins un matériau conducteur électronique, et (ii) de particules d'au moins une céramique conductrice de protons de formule (I) ci-dessus.

Enfin, dans un dernier mode de réalisation, le dispositif est un capteur d'hydrogène comportant
- une électrode positive,
- une électrode négative,
les deux électrodes étant séparées par une céramique conductrice de protons de formule (I) ci-dessus,
et un opercule perforé couvrant la totalité de la surface de l'électrode positive.

Un tel dispositif électrochimique, lorsqu'il s'agit d'une pile à combustible, combine de nombreux avantages des piles à combustible de type SOFC ou PMEFC décrites en introduction, sans toutefois souffrir des inconvénients de celles-ci. Un tel dispositif peut fonctionner dans des applications mobiles ou stationnaires. Il présente, comme les SOFC, un rendement électrique élevé et une haute température de cogénération et se distingue des SOFC principalement par une température optimale de fonctionnement nettement moins importante, comprise entre 200 °C et 600 °C. Cette réduction de la température de fonctionnement aboutit à une augmentation de la durée de vie des dispositifs électrochimiques, à une meilleure résistance au cyclage thermique, et permet le remplacement des céramiques et aciers coûteux, utilisés pour les interconnecteurs des SOFC, par des aciers standard. Contrairement aux PEMFC, les dispositifs électrochimiques de la présente invention n'ont pas besoin de catalyseurs coûteux à base de platine et sont insensibles à un empoisonnement par le monoxyde de carbone.

Le matériau céramique conducteur de protons utilisé en tant qu'électrolyte solide dans le dispositif électrochimique de la présente invention doit avoir une conductivité électronique négligeable, afin d'éviter les courts-circuits. Il doit par ailleurs être imperméable aux gaz et se présente de préférence sous forme d'un matériau fritté à porosité fermée. Cette porosité fermée est de préférence réduite au minimum, autrement dit le matériau céramique présente avantageusement un taux de compacité important, de préférence supérieure à 95 %.

Les matériaux céramiques de formule (I) ci-dessus se distinguent par une excellente aptitude au frittage : ils peuvent être compactés jusqu'au taux de compacité souhaité, supérieur à 95 %, par frittage à une température relativement basse, inférieure ou égale à 1400 °C, et comprise typiquement entre 1300 °C et 1400 °C.

Un autre avantage des matériaux céramiques de formule (I) réside dans le fait que, contrairement à d'autres matériaux céramiques, ils ne réagissent pas, dans le domaine de température allant de 200 °C à environ 550 °C, avec le dioxyde de carbone susceptible d'être présent dans le compartiment anodique de la pile. La formation de carbonates est un des facteurs qui limitent la température de fonctionnement du dispositif électrochimique de la présente invention en présence de CO₂.

Le matériau céramique conducteur de protons de la présente invention présente une structure cristalline de type pérovskite dérivée de Ba₂In₂O₅ par remplacement partiel des ions baryum et/ou indium et hydratation d'au moins une partie des lacunes d'oxygène avec formation de groupes hydroxyle, indispensables à la conduction protonique des matériaux céramiques.

La conduction protonique des matériaux céramiques provient en effet du transfert de protons entre des groupements (OH)⁻ et O²⁻, connu sous le nom de mécanisme de Grotthus. Le niveau de conductivité à une certaine température est lié à la mobilité du proton et à sa concentration. La concentration en protons dépend directement de la densité des groupes hydroxyle introduits dans le matériau par la réaction d'hydratation des lacunes d'oxygène. La concentration des lacunes d'oxygène peut, à son tour, être modulée par remplacement d'une partie des ions baryum et/ou indium par des ions métalliques Ti ayant un degré d'oxydation différent.

La mobilité des protons est fonction de la facilité avec laquelle ils rompent leur liaison O-H avec l'oxygène du groupe hydroxyle lié à un cation métallique. Cette mobilité dépend donc de la nature plus ou moins ionique ou covalente de la liaison oxygène-cation métallique. Ainsi, le niveau de la conductivité protonique dépend fortement de la composition et de la concentration en éléments métalliques.

La Demanderesse a obtenu d'excellents résultats, notamment en termes de conductivité, avec des matériaux céramiques dans lesquels les ions de baryum n'étaient pas remplacés par d'autres cations métalliques et seule une faible fraction des ions indium, inférieure à 30 %, était remplacée par des ions Ti(IV).

L'électrolyte solide conducteur de protons selon l'invention est par conséquent une céramique de formule (Ia)

(Ia) Ba₂In_{2(1-y)}Ti₂yO_{4+δ}(OH)_{δ'}

où 0 ≤ y ≤ 0,3, δ ≤ 2 et 0 < δ' ≤ 2.

Bien entendu, les performances des matériaux céramiques utilisés dans la présente invention ne dépendent pas uniquement de la composition en cations métalliques et du nombre de lacunes en oxygène, mais du taux d'hydratation des lacunes, chaque molécule d'eau fixée aboutissant à la disparition d'une lacune et à la formation de deux groupes hydroxyle. La réaction d'hydratation est une réaction réversible dont la constante d'équilibre dépend directement de la température de fonctionnement du dispositif électrochimique. Comme il a déjà été indiqué ci-avant, Jayaraman et al. Solid State Ionics, 170, (2004), pages 25 - 32, avaient en effet observé qu'un phénomène de déshydratation se produisait à des températures supérieures à environ 200°C. La Demanderesse a toutefois découvert que la diminution de la conductivité protonique due à la déshydratation du matériau céramique était largement compensée par une augmentation spectaculaire de la mobilité des protons à haute température. La température de fonctionnement optimale d'une pile à combustible selon la présente invention correspond par conséquent au meilleur compromis entre le nombre de groupes hydroxyle disponibles, qui diminue avec la température, et la mobilité de chacun des protons qui augmente avec la température.

Cette température optimale de fonctionnement, correspondant à une conductivité protonique maximale de la céramique, est comprise entre 200 °C et 600 °C, de préférence entre 300 °C et 500 °C. Les céramiques conductrices utilisées dans la présente invention présentent ainsi, à une température comprise dans la plage allant de 200 °C à 600 °C et sous une atmosphère d'air humidifié contenant 3 % de vapeur d'eau, une conductivité protonique au moins égale à 10⁻⁴ S/cm. Aux températures voisines de 400 °C, cette conductivité, mesurée également sous atmosphère humidifiée à 3 % de vapeur d'eau, dépasse 10⁻³ S/cm, voire 2.10⁻³ S/cm.

Les céramiques conductrices décrites ci-dessus, se distinguent en outre par le fait que la réaction d'hydroxylation des lacunes d'oxygène par hydratation s'accompagne d'une faible augmentation de volume. Cette propriété garantit la stabilité mécanique du matériau et empêche sa rupture et sa fissuration lorsqu'il est soumis à d'importantes variations de température au moment de la mise en route ou de l'arrêt du dispositif électrochimique de la présente invention.

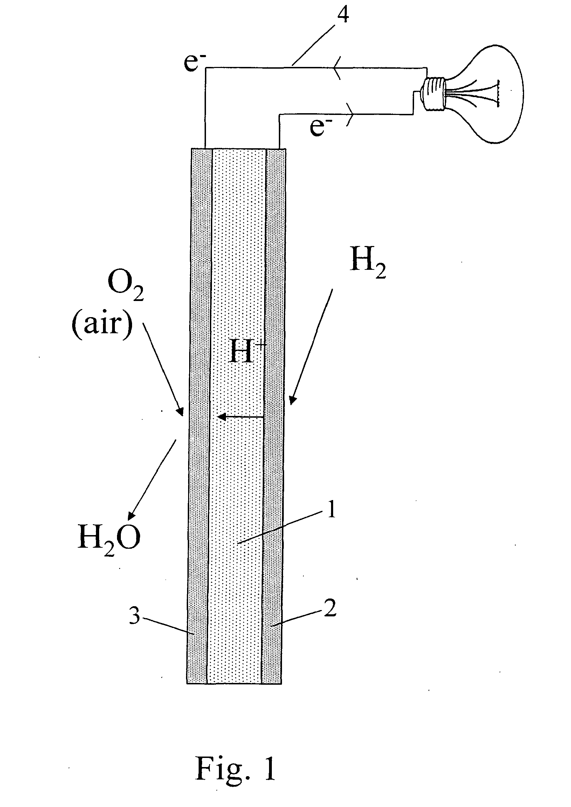

Le dispositif électrochimique de la présente invention peut être une pile à combustible de type classique telle que représentée à la figure 1, avec un compartiment d'anode alimenté en continu par de l'hydrogène ou par un mélange de gaz contenant de l'hydrogène et un compartiment de cathode alimenté par de l'oxygène ou de l'air, les deux compartiments étant séparés par l'électrolyte conducteur de protons (1) de formule (I). L'hydrogène, au contact de l'électrode négative (2) ou anode, se dissocie en électrons et protons. Les protons sont amenés à travers l'électrolyte conducteur de protons (1) vers l'électrode positive (3) ou cathode, avec création d'un courant électrique par transfert des électrons vers le circuit électrique (4) de la pile. Au niveau de la cathode (3), la combinaison des protons avec l'oxygène et les électrons transportés par le circuit électrique aboutit à la formation d'eau. L'anode peut être constituée par exemple d'un mélange percolant, c'est-à-dire d'un mélange permettant la percolation des électrons et protons, d'un métal tel que le nickel ou le platine et de la céramique conductrice de protons de la présente invention. La cathode est par exemple constituée d'un mélange percolant d'une céramique conductrice d'électrons (LaNiO₄ et de la céramique conductrice de protons de la présente invention.

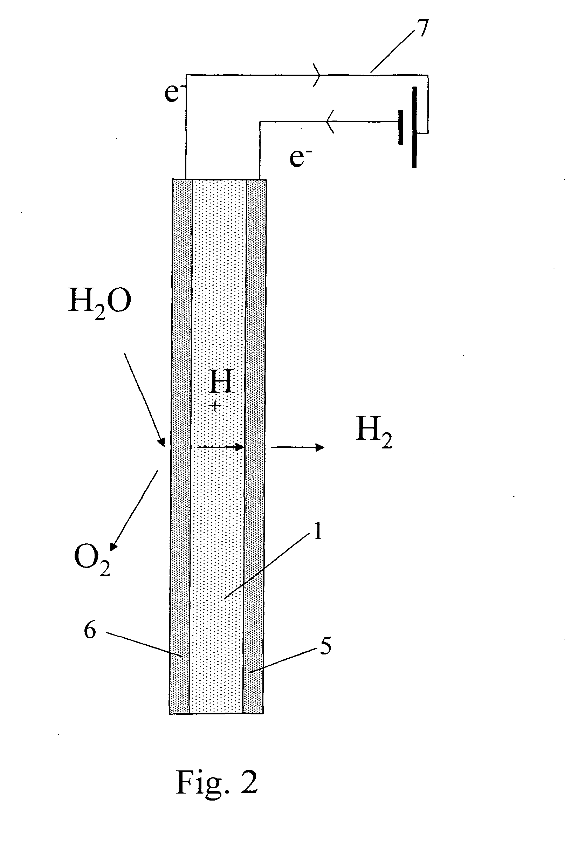

Le dispositif électrochimique de la présente invention peut bien entendu être également une cellule d'électrolyse, telle que représentée à la figure 2, dans laquelle se produit la réaction inverse de celle qui a lieu dans la pile à combustible de la figure 1. Dans une telle cellule à électrolyse, un courant est appliqué entre une électrode négative (5) ou cathode et une électrode positive (6) ou anode, séparées l'une de l'autre par un électrolyte conducteur de protons (1) de formule (I) tel que décrit ci-dessus. De l'eau introduite au niveau du compartiment de l'anode est dissociée de manière connue en protons, électrons et oxygène. Les protons traversent l'électrolyte conducteur de protons et se combinent dans le compartiment cathodique avec les électrons amenés par le circuit électrique (7) pour former de l'hydrogène.

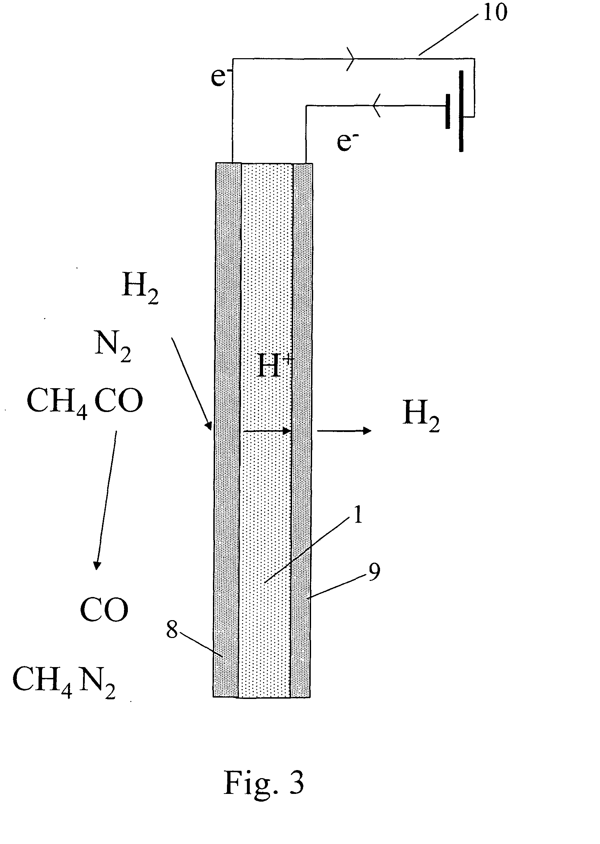

Le dispositif électrochimique de la présente invention peut également être une membrane sélective de purification d'hydrogène dont un mode de réalisation est représenté à la figure 3. Une telle membrane comporte une électrode positive (8) et une électrode négative (9) séparées par une céramique conductrice de protons (1) de la présente invention. L'hydrogène contenu dans un mélange de gaz (H₂, N₂, CH₄, CO) se dissocie au contact de l'électrode positive (8.) en protons et électrons. Tandis que les protons formés migrent sous l'effet du potentiel électrique à travers la céramique conductrice de protons (1) vers l'électrode négative (9), les électrons entrent dans le circuit électrique (10). Au niveau de l'électrode négative, les protons et électrons se recombinent pour former de l'hydrogène pur.

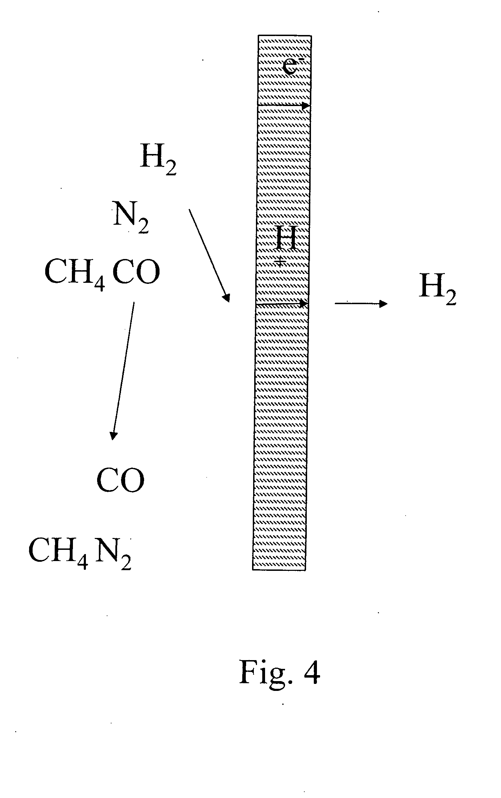

Un autre mode de réalisation d'une membrane de purification d'hydrogène est représenté à la figure 4. Une telle membrane doit contenir, outre la céramique conductrice de protons de formule (I), au moins un matériau conducteur électronique, tel qu'un métal. Le matériau conducteur de protons et le matériau conducteur électronique sont généralement mélangés sous forme de poudres et comprimés et frittés conjointement de manière à former un mélange percolant, c'est-à-dire un mélange permettant la percolation des électrons et protons à travers un réseau continu du matériau conducteur d'électrons ou de protons. Le principe de fonctionnement d'une telle membrane est le suivant : une face de la membrane est mise en contact avec un mélange de gaz sous pression contenant de l'hydrogène à purifier.

L'hydrogène, au contact de la membrane se dissocie en protons et électrons. Les premiers traversent la membrane via le matériau conducteur de protons de formule (I) alors que les seconds sont conduits par le matériau conducteur électronique. La membrane étant par ailleurs imperméable aux autres gaz du mélange, la recombinaison des protons et électrons aboutit à la formation d'hydrogène pur sur l'autre face de la membrane.

La seule force motrice d'une telle membrane est la différence de pression partielle d'hydrogène de part et d'autre de la membrane. Plus celle-ci est élevée, plus la membrane est efficace.

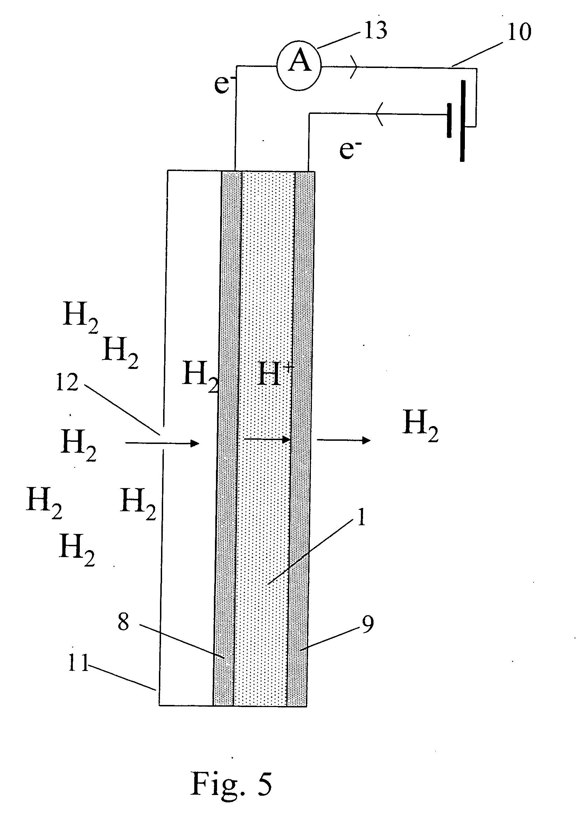

La figure 5 représente un capteur d'hydrogène utilisant une céramique conductrice de protons de la présente invention. Ce capteur fonctionne essentiellement selon le même principe que la membrane de séparation représentée à la figure 3, à ceci près que la totalité de la surface de l'électrode positive (8) est recouverte d'un opercule perforé (11). Lorsque cet opercule est mis en contact avec un mélange gazeux contenant de l'hydrogène, une partie de ce mélange traverse l'orifice (12) de l'opercule (11) et diffuse vers l'électrode positive (8). La dissociation de l'hydrogène au contact de l'électrode positive (8) donne lieu à un courant dont l'intensité, mesurée par un ampèremètre (13) dans le circuit électrique (10), est directement proportionnelle à la concentration d'H₂ dans le mélange gazeux.

### Exemple

### Préparation d'une céramique conductrice de protons

On mélange du carbonate de baryum BaCO₃ de l'oxyde de titane TiO₂ et de l'oxyde d'indium In₂O₃ en les proportions appropriées pour obtenir un matériau de formule (I) où y ₌ 0,2. On introduit les poudres dans un mortier, puis on les mélange en les broyant avec de l'acétone. Après évaporation de l'acétone, le mélange de poudres est placé dans un creuset en platine et est chauffé à une vitesse de 400 °C/h jusqu'à une température de 1200 °C, puis maintenu à cette température pendant 24 heures. On refroidit ensuite le matériau à une vitesse identique à la vitesse de chauffage jusqu'à la température ambiante, puis on broie le produit obtenu à l'aide d'un mortier de manière à obtenir une poudre fine. Cette poudre est ensuite compactée à l'aide d'une presse uniaxiale et mise sous forme de pastilles. Les pastilles subissent alors un traitement thermique sous atmosphère d'air à 1350 °C pendant 24 heures (vitesse de chauffage et de refroidissement de 140 °C/h). Cette première étape aboutit à un matériau pur, partiellement hydraté, correspondant à la formule Ba₂In_{1,6}Ti_{0,4}O_{5,2-δ'/2} (OH)_{δ'} (δ'<0,8). Ce matériau est ensuite porté à une température d'environ 200 °C sous une atmosphère d'air humidifié (P_{H2O} 3 %) et est maintenu dans ces conditions pendant une semaine. Cette hydratation à chaud aboutit à un matériau de formule Ba₂In_{1,6}Ti_{0,4}O_{4,4}(OH)_{1,6}.

Lorsqu'on chauffe ce matériau sous une atmosphère de CO₂ humidifiée (P_{H2O} 3 %) on observe une stabilité chimique vis-à-vis du dioxyde de carbone jusqu'à une température d'environ 550 °C. Au-delà, le matériau réagit avec le dioxyde de carbone à une vitesse proportionnelle à la température.

La poudre obtenue à l'issue de la première étape est ensuite broyée pendant 2 heures à l'aide d'un broyeur planétaire (0,5 g de poudre dans de l'éthanol, 500 tours/min, 3 billes par jarre) puis comprimée à l'aide d'une presse uniaxiale. Le comprimé est soumis à un traitement thermique sous atmosphère d'air à 1350 °C pendant 24 heures (vitesse de chauffage et de refroidissement 140 °C/h). La microscopie électronique à balayage de l'échantillon obtenu révèle une porosité fermée inférieure à 5 %. L'échantillon dense, soumis à un cyclage thermique entre 30 °C et 800 °C sous atmosphère humide, autrement dit à une succession d'alternances d'hydratation et de déshydratation, ne présente aucun signe de fissuration ou de rupture.

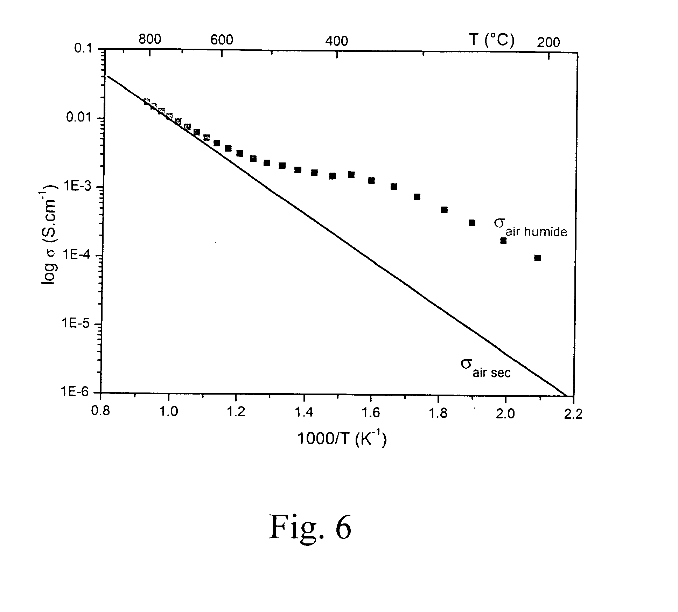

La caractérisation électrique de l'échantillon a été réalisée par spectroscopie d'impédances complexes sous atmosphère contrôlée en oxygène ou en vapeur d'eau. La Figure 6 montre la conductivité du composé Ba₂In_{1,6}Ti_{0,4}O_{5,2-δ'/2}(OH)_{δ'} sous air humidifié (■) à 3 % en fonction de la température. La courbe de conductivité du composé non protoné Ba₂In_{1,6}Ti_{0,4}O_{5,2} sous air sec est également donnée à titre indicatif. La conductivité du matériau hydraté atteint une valeur de 2.10⁻³ S.cm⁻¹ à environ 400 °C, température à laquelle δ' est environ égal à 0,25. Cette figure illustre le domaine de fonctionnement optimal du matériau conducteur protonique de la présente invention. En effet, aux températures inférieures à 200 °C, le matériau est fortement hydraté mais la mobilité limitée des protons se traduit par des conductivités insuffisantes. Au-delà d'environ 550 °C à 600 °C, le matériau est presque totalement déshydraté et la courbe de la conductivité déterminée sous atmosphère humide se superpose à celle déterminée sous atmosphère sèche. La conductivité est alors essentiellement de type anionique (O₂⁻).

## Revendications

1. Utilisation d'une céramique de formule
Ba₂In_{2(1-y)}Ti_{2y}O_{4+δ}(OH)_{δ'}
où
0 ≤ y 0,3, δ ≤ 2 et 0 < δ' ≤ 2, en tant qu'électrolyte solide conducteur de protons dans un dispositif électrochimique choisi parmi une pile à combustible, une cellule d'électrolyse, un capteur d'hydrogène, une membrane de purification d'hydrogène ou une combinaison de ceux-ci, à une température comprise entre 200 °C et 600 °C, ladite céramique ayant une conductivité protonique, mesurée à 400 °C, supérieure à 10⁻³ S/cm.

2. Utilisation selon l'une quelconque des revendications précédentes, **caractérisée par le fait que** la céramique est imperméable aux gaz.

3. Utilisation selon l'une quelconque des revendications précédentes, **caractérisée par le fait que** la céramique est un matériau fritté.

4. Utilisation selon la revendication 3, **caractérisée par le fait que** le matériau céramique fritté présente une porosité fermée et un taux de compacité supérieure à 95 %.

5. Utilisation selon la revendication 4, **caractérisée par le fait que** la porosité fermée et le taux de compacité supérieur à 95 % peuvent être obtenus par frittage à une température inférieure ou égale à 1400 °C.

6. Utilisation selon l'une quelconque des revendications précédentes, **caractérisée par le fait que** le matériau céramique est utilisé à une température comprise entre 300 °C et 500 °C.

## Patentansprüche

1. Verwendung einer Keramik der Formel Ba₂In_{2(1-y)}Ti_{2y}O₄+δ(OH)_{δ'}, wobei 0 ≤ y ≤ 0,3, δ ≤ 2 und 0 < δ' ≤ 2, als protonenleitendes Festelektrolyt in einer elektrochemischen Vorrichtung, die eine Brennstoffzelle, eine Elektrolysezelle, eine Reinigungsmembran für Wasserstoff oder eine Kombination aus diesen ist, bei einer Temperatur zwischen 200°C und 600°C, wobei die Keramik eine bei 400°C gemessene Protonenleitfähigkeit von mehr als 10⁻³ S/cm hat.

2. Verwendung nach einem der vorangehenden Ansprüche, **dadurch gekennzeichnet, dass** die Keramik gasundurchlässig ist.

3. Verwendung nach einem der vorangehenden Ansprüche, **dadurch gekennzeichnet, dass** die Keramik ein gesintertes Material ist.

4. Verwendung nach Anspruch 3, **dadurch gekennzeichnet, dass** das gesinterte keramische Material eine geschlossene Porosität und eine Packungsdichte von über 95% aufweist.

5. Verwendung nach Anspruch 4, **dadurch gekennzeichnet, dass** die geschlossene Porosität und die Packungsdichte von über 95% durch Sintern bei einer Temperatur, die kleiner oder gleich 1400°C ist, erreichbar ist.

6. Verwendung nach einem der vorangehenden Ansprüche, **dadurch gekennzeichnet, dass** das keramische Material bei einer Temperatur zwischen 300°C und 500°C verwendet wird.

## Claims

1. Use of a ceramic of formula
Ba₂In_{2(1-y)}Ti_{2y}O_{4+δ}(OH)_{δ'}
wherein
0 ≤ y ≤0.3; δ ≤2 and 0 < δ' ≤ 2, as a solid proton-conducting electrolyte in an electrochemical device chosen from a fuel cell, an electrolytic cell, a hydrogen detector, a hydrogen purification membrane or a combination thereof, at a temperature comprised between 200 °C and 600 °C, said ceramic having a proton conductivity, measured at 400 °C, greater than 10⁻³ S/cm.

2. Use according to any one of preceding claims, **characterised in that** the ceramic is impermeable to gases.

3. Use according to any one of preceding claims, **characterised in that** the ceramic is a sintered material.

4. Use according to claim 3, **characterised in that** the sintered ceramic material has a closed porosity and a level of compactness greater than 95 %.

5. Use according to claim 4, **characterised in that** the closed porosity and the level of compactness greater than 95 % obtainable by sintering at a temperature equal or lower than 1400 °C.

6. Use according to any one of preceding claims, **characterised in that** the ceramic material is used at a temperature comprised between 300 °C and 500 °C.
